# EUROPEAN PATENT SPECIFICATION

(11) **EP 2 764 597 B1**
(45) Date of publication and mention of the grant of the patent: **15.07.2026**
(21) Application number: 11793729.2
(22) Date of filing: 01.12.2011
(51) Int. Cl.: H02J 3/00, H02J 13/00

(54) **PROCESSING DATA OF A TECHNICAL SYSTEM COMPRISING SEVERAL ASSETS**
VERARBEITUNG VON DATEN EINES TECHNISCHEN SYSTEMS MIT MEHREREN ANLAGEN
TRAITEMENT DES DONNÉES D'UN SYSTÈME TECHNIQUE COMPRENANT PLUSIEURS ÉQUIPEMENTS

(43) Date of publication of application: 13.08.2014
(73) Proprietor: Siemens Energy Global GmbH & Co. KG, 81739 München (DE)
(72) Inventor: OLEA JAIK, Fernando, 90459 Nürnberg (DE)
(86) International application number: PCT/EP2011/071503
(87) International publication number: WO 2013/079112

(56) References cited:
- WO-A1-2010/136054
- WO-A2-2011/019872
- CN-A- 102 122 844
- JP-A- 2009 065 778
- US-A1- 2003 144 803

## Description

The invention relates to a method and to a device for processing data of a technical system comprising several assets. Also, a power transmission and distribution system is suggested providing at least one such device.

Condition Monitoring (CM) for power transmission and distribution substations is a rather diverse landscape: Known CM systems of the power transmission and distribution domain are stand-alone systems, making condition monitoring of different asset types a complex and laborious task. In this regard, an operator of a power transmission and distribution system may have to face the following problems:
(a) Communication Issues: Commonly known CM systems do not have a focus directed to communication tasks, instead they are designed as stand-alone systems without any standardized communication interface. The operator thus has to check several different systems to conduct a monitoring task for a substation. It is also common for an operator to go to the asset and check or record its CM data. This approach is time consuming and tedious in particular in case the operator has to gather CM data from several assets on-site.
(b) Different Look and Feel: Each CM system has its own way to arrange, to process and/or to present information. Hence, the operator at a substation (being the first level of support in case of an emergency) needs to become an expert for several assets, systems, technological platforms and CM philosophies to be able to make a correct decision. Hence, the operator's expertise becomes a critical factor for, e.g., correct and prompt failure handling.
(c) Failure Type Harmonization: Failure handling and alarm handling is a crucial issue for an operator. With each different CM system comes a different way to treat and classify alarms. For example, a "Warning" from a first CM system may be more critical than a "Failure" from a second CM system. The operator needs to know all such differences to be able to make a well-educated decision. Such knowledge is difficult to transfer from one person to another and may largely depend on a particular operator's experience.
(d) System Maintenance: An increasing number of assets or systems to monitor bear the risk to lose track. Hence, the probability of a not well-handled condition increases with the number of CM systems that are in need for operator's attention.

All known solutions for power transmission and distribution scenarios are highly complex, fragmented and difficult to handle from a CM perspective. A proper handling of CM systems thus is highly dependent on an operator's knowledge and experience, which as such bears a risk in particular with regard to changing or growing or more complex power transmission and distribution systems.

WO 2010/136054 A1 discloses a power transmission and distribution system with a hierarchy of levels.

The **objective** is thus to provide an improved approach for condition monitoring means, in particular to allow for an efficient condition monitoring across several assets of different types.

This problem is solved according to the features of the independent claims. Further embodiments result from the depending claims.

In order to overcome this problem, a method is provided for processing data of a technical system, wherein the technical system is in particular a power transmission and distribution system and wherein the technical system comprises several assets,
- wherein the several assets are at least partially of different types;
- wherein data of the several assets are determined;
- wherein based on the data determined a status information is derived;
- wherein the status information is conveyed across a hierarchy of an integrated condition monitoring system.

Hence, the solution presented allows an efficient mapping of condition monitoring (CM) modules in the integrated CM system. Any event occurring at a bottom structure of an asset that is part of the integrated CM system becomes apparent on a top level of the CM system.

In an embodiment, the data of the assets are determined by measurement of at least one sensor or by processing data based on the measurement of at least one sensor.

The sensor may be part of the asset or it may be a sensor that is associated with the asset.

In another embodiment, the asset is at least one of the following:
- a transformer;
- a cable or a line;
- a switch, in particular a gas insulated switchgear;
- a circuit breaker.

In a further embodiment, each type of asset comprises a condition monitoring module which is merged to the integrated condition monitoring system.

The integrated CM system thus combines CM modules of various types in an efficient manner.

In a next embodiment, the hierarchy of the integrated condition monitoring system comprises
- a main project level;
- an asset-project level;
- a detail level; and
- a sub-detail level.

Any combination of the aforementioned levels of hierarchy may be used. However, further levels may be provided in case of a large technical system.

It is also an embodiment that the status information comprises at least one of the following:
- a status signal
- a trigger.

Pursuant to another embodiment, the trigger comprises an event and/or an alarm.

According to an embodiment, the alarm is determined based on events or alarms of previous condition monitoring means, wherein the events or alarms are mapped to alarms of the integrated condition monitoring system.

According to another embodiment, the alarm is displayed on an overview portion of the integrated condition monitoring system.

In yet another embodiment, the integrated condition monitoring system provides links to access detailed information regarding the assets, wherein the detailed information is displayed in a frame together with the overview portion.

According to a next embodiment, an alarm comprises a type of alarm and a level of criticality.

Pursuant to yet an embodiment, the level of criticality comprises at least one of the following:
- a critical failure;
- a failure;
- a warning;
- a communication failure;
- an unknown event.

Any combination of the aforementioned levels of criticality may be used. It is also possible to provide a further granularity of or additional levels of criticality.

According to a further embodiment, the type of alarm is associated with at least one of the following:
- an asset;
- a sensor;
- a communication means;
- the condition monitoring system.

According to another embodiment, based on the type of alarm and/or its level of criticality, a color code is used for displaying the alarm, wherein across the different types of assets each color code is associated with a predefined action and/or at least one predefined specialist.

Hence, the color code can be used to indicate to an operator what kind of action he has to initiate. This may be largely generic and independent from the actual asset affected.

The problem stated above is also solved by a device for processing data of a technical system comprising several assets wherein the several assets are at least partially of different types, comprising a processing unit that is arranged for
- determining data of the several assets;
- deriving a status information based on the data determined;
- conveying the status information across a hierarchy of an integrated condition monitoring system.

It is noted that the steps of the method stated herein may be executable on this processing unit as well.

It is further noted that said processing unit can comprise at least one, in particular several means that are arranged to execute the steps of the method described herein. The means may be logically or physically separated; in particular several logically separate means could be combined in at least one physical unit.

Said processing unit may comprise at least one of the following: a processor, a microcontroller, a hard-wired circuit, an ASIC, an FPGA, a logic device.

The solution provided herein further comprises a computer program product directly loadable into a memory of a digital computer, comprising software code portions for performing the steps of the method as described herein.

In addition, the problem stated above is solved by a computer-readable medium, e.g., storage of any kind, having computer-executable instructions adapted to cause a computer system to perform the method as described herein.

Furthermore, the problem stated above is solved by a system comprising at least one device as described herein. The system could be a power transmission and distribution system.

The aforementioned characteristics, features and advantages of the invention as well as the way they are achieved will be further illustrated in connection with the following examples and considerations as discussed in view of the figures.
- Fig.1: shows a diagram visualizing an exemplary structure of an integrated CM system;
- Fig.2: shows an exemplary view of the integrated CM system that is shown to an operator;
- Fig.3: shows a flow chart comprising steps of a method for processing data of a technical system, which technical system comprises several assets of at least partially different type.

The solution presented in particular allows integrating different condition monitoring (CM) solutions (e.g., modules or systems) in a suitable platform that could be operated automatically and/or by a person who does not need to be an expert with regard to all types of assets which are subject to such integrated CM.

It is noted that asset may be any component of a power transmission and distribution system, in particular a substation of such power transmission and distribution system. The asset may in particular be any of the following:
- a transformer;
- a cable or a line;
- a switch, in particular a gas insulated switchgear;
- a circuit breaker;
- a surge arrester;
- a cable sealing end;
- a measurement transformer;
- a protection relay;
- a battery system;
- a balance of plant system.

The solution presented herein provides an integrated CM system that may comprise several CM modules. The integrated CM system merges CM functionality across assets of different types. The integrated CM system is also referred to as integrated platform or the like.

Such a solution bears the advantage that various CM modules of different capability and/or interfaces can be merged to the integrated CM system that provides an easy-to-handle overview to an operator, wherein a tree-like structure allows for an integrated CM top-view to a technical system. This technical system, preferably a power transmission and distribution system, comprises several assets of various types, wherein detailed information about the assets can be accessed via said tree-like structure, e.g., by selecting the subsequent level towards the bottom of the tree. At the bottom of the tree, a leaf may represent an expert level of detail with regard to a particular component of the power transmission and distribution system.

A structure of the actual system can be used in order to enable the integrated CM system to flexibly integrate existing CM modules or add further CM modules. The CM modules may be associated with various asset types. The approach also allows designing a CM module for a particular asset as a stand-alone module to be then efficiently merged with the CM platform at a later stage or on demand (e.g., in case the actual system is growing in size and complexity).

An alarm classification scheme and/or an alarm handling scheme can be determined (e.g., defined and/or harmonized) in particular based on already existing alarm classification and/or handling concepts. For example, alarm messages of existing CM modules can be processed (e.g., gathered and/or classified) according to an alarm matrix (or any structure that may provide a comparable functionality). Based on such alarm matrix, a process of the CM platform may be able to provide a homogenous alarm handling concept suitable for various alarms of different CM modules (of, e.g., different assets and/or different asset types).

Also, an integrated framework can be provided in particular together with design guidelines for CM modules. This approach bears the advantage of a similar (or identical) look and feel across different CM modules, i.e. different assets. For example, a user interface can be supplied that offers an overview of all monitored assets at all times and an easy and intuitive solution for tracking warnings, failures or whatever event needs to be tracked in a level of detail required or requested. For example, a top view of a system can be provided via the integrated CM system and upon an alarm being indicated, an operator can select the system or asset connected with the alarm on the required level of detail in order to become aware of, e.g., the actual location of the alarm and/or counter-measure to be conducted. This way thus provides an easy way for the operator to select the asset which is the source of the alarm and inspect measured parameters of this asset in order to derive the reason for the alarm.

The integrated CM system can be at least partially implemented in software; an integration project can be designed to gather information from and to manage several CM modules. As an option, templates can be provided for a CM module yet to be developed or integrated. Also, experts from various assets may help in defining CM modules and/or alarm classification / handling schemes.

By defining a suitable structure or basis for the CM platform, said integration of various CM modules can be realized while ensuring, e.g., that each CM module may work autonomously. The number of CM modules can be flexible; hence an expansion of the integrated CM system (said CM platform) is feasible when the underlying technical system or asset(s) grow(s). This concept is in particular useful with regard to said alarm classification / handling schemes.

Integrating existing or upcoming CM modules/systems may utilize at least one of the following approaches:
(1) It is determined which CM module or system to be integrated and how to interface this CM module with the integrated CM system. The integrated CM system may depend on or interface with an actual software platform. Examples of possible interfaces are: communication protocols (e.g. IEC 61850), direct wiring from data acquisition modules, text files, data bases, XML files, etc.
(2) CM information is classified. Such information may be analyzed and in particular associated with at least one of the following groups:
   (a) Status Signals: Measured values of an attribute or trait of the asset can be used as status signals, e.g., temperature measurements, density levels, ON/OFF status of switches, etc.
   (b) Triggers can be provided as, e.g., events or alarm messages. For example, a binary information (YES or NO; ON or OFF) may be used to indicate a condition or a change of such condition within the asset. If the change is without negative impact it can be referred to as "event"; if the change has some negative impact, it may be referred to as "alarm". The alarm could be further categorized to provide, e.g., different stages or alarm concepts. Such differentiation may comprise (prioritized from high to low priority) :
      - critical failure,
      - failure,
      - warning,
      - communication failure,
      - unknown event.
   This classification can be used to initiate different actions by the integrated CM system.
(3) Different types of output can be specified: For each piece of information (status signal or trigger, see (2) above) it can be determined how to process (e.g., present, indicate, display, etc.) such information within the CM platform. Information can be presented, e.g., via the user interface, the alarm list, the event list, recorded (periodically) in a data base, etc.
(4) A level of detail can be defined for each (or some pieces of) information. For example, information to be displayed on the user interface can be subject to a further classification in order to be able to decide at which level this information is to be presented. For example, the most general information can be displayed at the level of the asset itself, more detailed information can be obtained via a more detailed view about the asset and a next level of detail may go further into the sub-structure of the asset. The number of levels suitable may depend on the asset and/or the size of the system. The most detailed level of detail may refer to a leaf in a tree structure and it may comprise measurement data obtained from sensors at the asset. It may, however (in particular at various detail levels) provide information that is derived from measurement data of this asset (and other assets, if applicable).
   Hence, a layout can be determined for the integrated CM system and its CM modules as well as the information to be presented on each screen (also referred to as view).
(5) Generation of the integrated CM platform: The aforementioned steps (1) to (4) provide means to set up and/or configure an efficient integrated CM platform comprising several CM modules. The CM modules may be merged into the integrated CM platform by using templates and mapping information available to the integrated CM platform.

An integrated framework and design guideline allow the operator to experience one look and feel across various CM modules. In addition to the alarm concept described herein, the framework allows for less trained operators, who do not have to be experts for all assets that are under surveillance by the integrated CM system. Another advantage of the integrated CM system is the fact that a single machine (e.g., computer) can be used to monitor a huge system, because of the efficient tree-like structure used for accessing and/or presenting information. Hence, it is no longer necessary to provide a piece of hardware (computer and monitor) for each asset or for each type of asset.

Using this approach of the integrated CM system and the beneficial alarm concept helps to overcome existing disadvantages of communication issues between various CM modules, different look and feel, failure type diversification, etc. This allows alleviating the training requirement or expert level otherwise necessary for an operator in charge of the integrated CM system.

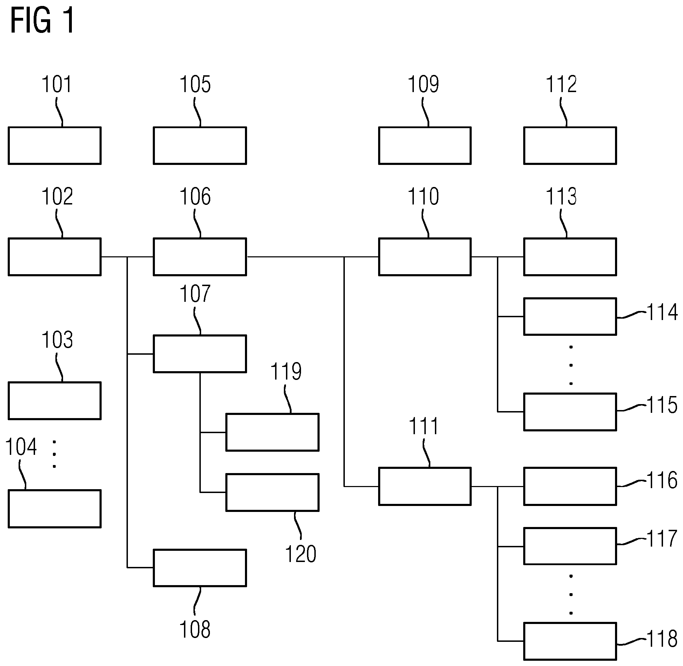

**Fig.1** shows a diagram visualizing an exemplary structure of an integrated CM system. On a main project level 101 the structure comprises several projects 102 to 104 to be subject to integration. Each project may comprise several asset-projects visualized on an asset project level 105. In the example shown in Fig.1, the project 102 comprises several asset projects 106, 107 and 108, which can each be regarded as root of a CM module. For example, on a detail level 109, the asset project 106 comprises several projects 110 and 111, wherein the project 110 on a sub-detail level 112 comprises several sub-detail projects 113 to 115 and the project 111 comprises several sub-detail projects 116 to 118.

Hence, the root 106 and the underlying projects and sub-projects may constitute a CM module that is subject to integration. It is noted that each project, in particular at the most detailed level may comprise at least one actual component of a power transmission and distribution (sub-)system, which may gather measurements to be processed by the integrated CM system in order to derive, e.g., an alarm.

The CM module 106, 107 and 108 each may serve as a basic construction means for the integrated CM system. The CM module may perform condition monitoring of its assets in an autonomous manner. Each CM module may in particular comprise the following levels:
(1) Asset-Project Level 105: General information about the condition of the at least one asset is determined, in particular displayed. As an example, the asset may be a gas insulated switchgear (GIS) and the general information of its CM module may provide a status summary of said GIS.
(2) Detail Level 109: General information about sub-systems of the CM module is determined, in particular displayed. With regard to the exemplary GIS, such general information of the sub-system may comprise information about the GIS subsystems, a gas density monitoring (GDM) and a partial discharge monitoring (PDM).
(3) Sub-Detail Level 112: The sub-systems of the detail-level can be portioned in smaller units that allow displaying of specific information about each such portioned unit. In the example of the GIS, with regard to the GDM and PDM sub-system, further sub-detail information can be provided according to the bays (numbered from 1 to n) which form the GIS.

The leveled structure bears the advantage that each CM module can be organized from an overview to a detailed view. If several assets of the same kind should be part of a common integrated CM system, the root project 106 can be used as a common basis for these assets of one kind or type. For example, the root project 107 "transformers" may gather the asset projects 119 "transformer 1" and 120 "transformer 2".

Hence, the integrated CM system comprises several CM modules. The project 102 may be used on top of several CM modules. It is noted, however, that the depth of the tree structure may vary according to the actual requirement or demand of the CM system.

Advantageously, the integrated CM system provides at least some of the following services:
(1) Alarm and event messages can be summarized in an overview, e.g., on a single overview screen.
(2) Links are provided to access asset projects (i.e. CM modules).
(3) A sub-station of a power transmission and distribution entity can be visualized, e.g., via an overview perspective.
(4) Conditions of the assets monitored can be signalized at any time. In particular, such signalization can be - dependent on the type of underlying event - made apparent on the overview screen of the asset, a group of assets and/or the integrated CM system.

### Alarm Harmonization

An alarm matrix or any similar data basis or functionality can be used to gather alarm information and in particular to harmonize various alarm schemes used throughout different CM modules. Hence, existing alarm schemes are migrated into a common alarm classification scheme used for all asset types of the integrated CM system. This allows operators to become familiar with a single alarm classification scheme thus making the integrated CM system flexible to be understood by any operator who knows the alarm classification scheme without requiring the operator to be an expert of different alarm schemes for various CM modules.

Such harmonized common alarm scheme for the integrated CM system can be provided via said matrix comprising
(1) a type of the alarm, e.g., failure that can happen in the integrated CM system; such alarm can thus be related to
   - an asset,
   - a sensor,
   - a communication (means or channel) and/or
   - the system.
(2) a level of criticality for the alarm, comprising:
   - critical failure,
   - failure,
   - warning,
   - known event,
   - unknown event.

Based on the type of alarm and its criticality, a color code can be used in order to visualize to an operator the importance of the condition that has been detected by the integrated CM system. For example, the following colors may be used:
- RED: indicates a critical failure reported by the asset, sensor and/or system; immediate action is required; a specialist of the affected asset has to be involved.
- ORANGE: indicates a failure reported by the asset, sensor and/or system; a short-term action is required; a specialist of the affected asset has to be involved.
- YELLOW: indicates a warning reported by the asset, sensor and/or system; the situation is to be analyzed and it has to be planned how to deal with the warning; a specialist of the affected asset has to be involved.
- BLUE: indicates a failure or critical failure of the communication; immediate action is required; a communication specialist has to be involved.
- PURPLE: indicates an unknown or unhandled situation reported by the asset, sensor, communication and/or system; the situation has to be analyzed and an appropriate action has to be planned; an asset specialist, communication specialist and/or CM system specialist has/have to be involved.

A mapping of alarms of an existing CM module to the color codes used by the integrated CM system can be conducted by an asset specialist. Hence for each color code, a reaction can be defined in combination with a proper level of support.

The color code and/or the subsequent reaction procedure based on the color code may be asset-type independent and/or CM system independent. Hence, when detecting an alarm, the operator may immediately know the criticality of the alarm, the way to proceed and whom to contact, just by seeing the color displayed.

There are several possibilities to map a status to the alarm and its level of criticality, e.g.,
- Status 1:: No alarm is present; no acknowledgement is pending: No color code is indicated.
- Status 2:: Alarm occurred and is still present; alarm has been acknowledged: Color code of alarm indication (solid fill).
- Status 3:: Alarm resolved, but resolving the alarm has not yet been acknowledged: the frame of the alarm indication is blinking.
- Status 4:: Alarm occurred and is still present; alarm has not been acknowledged yet: Color code of alarm indication is blinking.

The status of the respective alarm can be displayed at a button for the asset informing the operator about the current alarm situation.

### Alarm Handling

Alarm handling may be provided in the integrated CM system via an escalating concept. In case an alarm occurs (e.g., based on a measurement of a sensor) at a component 113 at the sub-detail level 112, such alarm is forwarded via the project 110 on the detail level 109 to the asset-project level 105, i.e. the project 106. From there it is conveyed to the main project level 101 and could be visualized at the overview of the project 102. Of course, a visualization can also be provided on every stage (level of detail) from the top to the bottom.

Such concept of escalation ensures that an alarm recognized at the bottom of a component under surveillance makes its way up to the main view and thus becomes visible to the operator of the integrated CM system. In addition, this concept also provides a path for the operator to follow and determine the reason for the alarm and its impact back down to the bottom, i.e. the physical component affected.

Hence, the solution presented allows for an intuitive and easy alarm handling even for an operator who is not an expert of the asset affected.

For example, the alarm handling may ensure that whenever an alarm is present throughout the system it is visible on the user interface. Hence, the operator does not have to check several separate CM modules which may indicate alarms independently from each other in order for him to become aware of a critical condition. Instead, the operator will automatically be informed about an alarm via the overview provided, e.g., on the main project level. If an alarm occurs and is indicated, the operator may simply click on the affected entity (which may be colored red or comprises a red sign indicating the alarm and its criticality); this can be done until the operator reaches the bottom view (i.e. the leaf of the tree structure) of the asset affected. The bottom view may provide an expert mode that may require the operator to be an expert for this particular asset or to contact or involve a suitable specialist.

The approach allows even an inexperienced operator (who does not have an expert of any of the assets) to specifically detect an alarm, to determine its type and to locate its position. Also, the operator knows whom to contact. Such expert may then be able to interpret the information provided on detail level or sub-detail level of the asset and to initiate suitable counter-measures, if deemed necessary.

Hence, alarms occurring somewhere in an asset that is subject to the integrated CM system are preferably indicated as long as they are not resolved. Hence, the top-view of the integrated CM system provides an overview of the current alarm situation. Alarm handling concepts lead the operator to the source of the problem and to a solution, e.g., by involving the suitable expert.

It is also an advantage that the operator experiences the same look and feel throughout the CM system. Thus, the concept is familiar to the operator even in case the underlying technical system changes. In particular, the operator does not have to receive extensive special training for each asset that is subject to CM.

An intuitive alarm tracking may be enabled by showing an actual map or a functional map with assets and their location, e.g., relative to each other. Hence, an operator can easily determine which asset is affected and/or where it is deployed. The operator can select an asset or the CM module, e.g., by clicking on it or by clicking on the alarm associated with the asset.

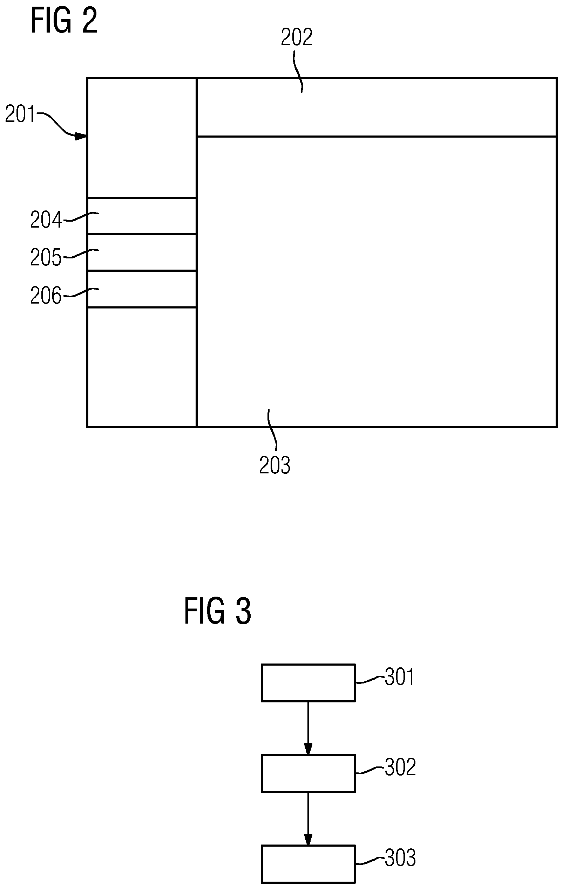

**Fig.2** shows an exemplary view of the integrated CM system that is shown to the operator. The view comprises a frame 201 on the left-hand side, a frame 202 at the top and a large frame 203 around the middle of the view. The view can be displayed on a monitor or within a window shown on the monitor.

The frame 201 may comprise a portion 204 to 206 for each CM module: an alarm of the CM module can be displayed within the according portion 204 to 206. The frame 201 including the portions 204 to 206 may be displayed in a persistent manner and provides an overview of the general alarm situation for the CM modules associated.

The frame 202 may comprise the projects on the asset-project level, the detail level or the sub-detail level, dependent on the selection of the operator. The frame 203 may present details with regard to the operator's recent selection, i.e. reflecting the asset on the requested level of detail. In a top-view the frame 203 may show the CM modules.

The frame 201 with the portions 204 to 206 referring to the CM modules may be present all the time, even when the operator is on a sub-detail level of an asset. Hence, the operator immediately notices an alarm of any asset of any CM module via said frame 201. Via the color code, the operator is able to differentiate more important alarms from less important alarms in an intuitive way and thus can react immediately.

**Fig.3** shows a flow chart comprising steps of a method for processing data of a technical system, which technical system comprises several assets of at least partially different type.

In a step 301 data of the several assets are determined. In a step 302, based on the data determined, a status information is derived and in a step 303 the status information is conveyed across a hierarchy of an integrated CM system. Although the invention is described in detail by the embodiments above, it is noted that the invention is not at all limited to such embodiments. In particular, alternatives can be derived by a person skilled in the art from the exemplary embodiments and the illustrations without exceeding the scope of this invention, which is defined by the appended claims.

### List of Reference Signs

- 101: main project level
- 102: project
- 103: project
- 104: project
- 105: asset project level
- 106: asset project
- 107: asset project
- 108: asset project
- 109: detail level
- 110: project (on detail level)
- 111: project (on detail level)
- 112: sub-detail level
- 113: sub-detail project
- 114: sub-detail project
- 115: sub-detail project
- 116: sub-detail project
- 117: sub-detail project
- 118: sub-detail project
- 119: asset project
- 120: asset project

- 201: frame
- 202: frame
- 203: frame
- 204: portion associated with CM module alarm status
- 205: portion associated with CM module alarm status
- 206: portion associated with CM module alarm status

- 301: step: determine data of several assets (wherein the assets are of different types)
- 302: step: derive status information based on the data determined
- 303: step: convey status information across hierarchy of the integrated CM system

## Claims

1. Method for processing data of a technical system comprising several assets,
- wherein the several assets are at least partially of different types;
- wherein data of the several assets are determined (301);
- wherein based on the data determined a status information is derived (302);
- wherein the status information is conveyed across a hierarchy of an integrated condition monitoring system (303),
wherein the hierarchy of the integrated condition monitoring system comprises
- a main project level;
- an asset-project level;
- a detail level; and
- a sub-detail level,
wherein the status information comprises a trigger,
wherein the trigger comprises an alarm,
wherein a visualization of the alarm is provided on every level of detail of the hierarchy of the integrated condition monitoring system,
wherein the technical system is a power transmission and distribution system,
wherein the asset is at least one of the following:
- a transformer;
- a cable or a line;
- a gas insulated switchgear;
a circuit breaker.

2. The method according to claim **1,** wherein the data of the assets are determined by measurement of at least one sensor or by processing data based on the measurement of at least one sensor.

3. The method according to any of the preceding claims, wherein each type of asset comprises a condition monitoring module which is merged to the integrated condition monitoring system.

4. The method according to any of the preceding claims, wherein the status information comprises at least one of the following:
- a status signal.

5. The method according to claim 4, wherein the trigger comprises an event.

6. The method according to claim 5, wherein the alarm is determined based on events or alarms of previous condition monitoring means, wherein the events or alarms are mapped to alarms of the integrated condition monitoring system.

7. The method according to any of claims 5 or 6, wherein the alarm is displayed on an overview portion of the integrated condition monitoring system.

8. The method according to claim 7, wherein the integrated condition monitoring system provides links to access detailed information regarding the assets, wherein the detailed information is displayed in a frame together with the overview portion.

9. The method according to any of claims 5 to 8, wherein an alarm comprises a type of alarm and a level of criticality.

10. The method according to claim 9, wherein the level of criticality comprises at least one of the following:
- a critical failure;
- a failure;
- a warning;
- a communication failure;
- an unknown event.

11. The method according to any of claims 9 or 10, wherein the type of alarm is associated with at least one of the following:
- an asset;
- a sensor;
- a communication means;
- the condition monitoring system.

12. The method according to any of claims 9 to 11, wherein based on the type of alarm and/or its level of criticality, a color code is used for displaying the alarm, wherein across the different types of assets each color code is associated with a predefined action and/or at least one predefined specialist.

13. A device for processing data of a technical system comprising several assets wherein the several assets are at least partially of different types, comprising a processing unit that is arranged for
- determining data of the several assets;
- deriving a status information based on the data determined;
- conveying the status information across a hierarchy of an integrated condition monitoring system,
wherein the hierarchy of the integrated condition monitoring system comprises
- a main project level;
- an asset-project level;
- a detail level; and
- a sub-detail level,
the status information comprises a trigger,
wherein the trigger comprises an alarm,
wherein a visualization of the alarm is provided on every level of detail of the hierarchy of the integrated condition monitoring system,
wherein the technical system is a power transmission and distribution system,
wherein the asset is at least one of the following:
- a transformer;
- a cable or a line;
- a gas insulated switchgear;
a circuit breaker.

14. A power transmission and distribution system comprising at least one device according to claim 13.

## Patentansprüche

1. Verfahren zum Verarbeiten von Daten eines technischen Systems, das mehrere Anlagen umfasst,
- wobei die mehreren Anlagen zumindest teilweise von verschiedenen Arten sind;
- wobei Daten der mehreren Anlagen bestimmt werden (301);
- wobei basierend auf den bestimmten Daten eine Statusinformation abgeleitet wird (302);
- wobei die Statusinformation über eine Hierarchie eines integrierten Zustandsüberwachungssystems übermittelt wird (303),
wobei die Hierarchie des integrierten Zustandsüberwachungssystems Folgendes umfasst:
- eine Hauptprojektebene;
- eine Anlagenprojektebene;
- eine Detailebene; und
- eine Teildetailebene,
wobei die Statusinformationen einen Auslöser umfassen,
wobei der Auslöser einen Alarm umfasst,
wobei eine Visualisierung des Alarms auf jeder Detailebene der Hierarchie des integrierten Zustandsüberwachungssystems bereitgestellt ist,
wobei das technische System ein Leistungsübertragungs- und - verteilungssystem ist,
wobei die Anlage zumindest eines des Folgenden ist:
- ein Transformator;
- ein Kabel oder eine Leitung;
- eine gasisolierte Schalteinrichtung;
ein Leistungsschalter.

2. Verfahren nach Anspruch 1, wobei die Daten der Anlagen durch Messung von zumindest einem Sensor oder durch Verarbeiten von Daten basierend auf der Messung von zumindest einem Sensor bestimmt werden.

3. Verfahren nach einem der vorhergehenden Ansprüche, wobei jede Art von Anlage ein Zustandsüberwachungsmodul umfasst, das mit dem integrierten Zustandsüberwachungssystem zusammengeführt ist.

4. Verfahren nach einem der vorhergehenden Ansprüche, wobei die Statusinformation zumindest eines des Folgenden umfasst:
- ein Statussignal.

5. Verfahren nach Anspruch 4, wobei der Auslöser ein Ereignis umfasst.

6. Verfahren nach Anspruch 5, wobei der Alarm basierend auf Ereignissen oder Alarmen von vorherigen Zustandsüberwachungsmitteln bestimmt wird, wobei die Ereignisse oder Alarme Alarmen des integrierten Zustandsüberwachungssystems zugeordnet sind.

7. Verfahren nach einem der Ansprüche 5 oder 6, wobei der Alarm auf einem Übersichtsabschnitt des integrierten Zustandsüberwachungssystems angezeigt wird.

8. Verfahren nach Anspruch 7, wobei das integrierte Zustandsüberwachungssystem Verknüpfungen bereitstellt, um auf detaillierte Informationen bezüglich der Anlagen zuzugreifen, wobei die detaillierten Informationen in einem Rahmen zusammen mit dem Übersichtsabschnitt angezeigt werden.

9. Verfahren nach einem der Ansprüche 5 bis 8, wobei ein Alarm eine Art von Alarm und eine Kritikalitätsebene umfasst.

10. Verfahren nach Anspruch 9, wobei die Kritikalitätsebene zumindest eines des Folgenden umfasst:
- einen kritischen Fehler;
- einen Fehler;
- eine Warnung;
- einen Kommunikationsfehler;
- ein unbekanntes Ereignis.

11. Verfahren nach einem der Ansprüche 9 oder 10, wobei die Art von Alarm mit zumindest einem des Folgenden assoziiert ist:
- einer Anlage;
- einem Sensor;
- einem Kommunikationsmittel;
- dem Zustandsüberwachungssystem.

12. Verfahren nach einem der Ansprüche 9 bis 11, wobei basierend auf der Art von Alarm und/oder seinem Kritikalitätsniveau ein Farbcode zum Anzeigen des Alarms verwendet wird, wobei über die verschiedenen Arten von Anlagen jeder Farbcode mit einer vordefinierten Handlung und/oder zumindest einem vordefinierten Spezialisten assoziiert ist.

13. Vorrichtung zum Verarbeiten von Daten eines technischen Systems, das mehrere Anlagen umfasst, wobei die mehreren Anlagen zumindest teilweise von verschiedenen Arten sind, umfassend eine Verarbeitungseinheit, die zu Folgendem angeordnet ist:
- Bestimmen von Daten der mehreren Anlagen;
- Ableiten einer Statusinformation basierend auf den bestimmten Daten;
- Übermitteln der Statusinformation über eine Hierarchie eines integrierten Zustandsüberwachungssystems,
wobei die Hierarchie des integrierten Zustandsüberwachungssystems Folgendes umfasst:
- eine Hauptprojektebene;
- eine Anlagenprojektebene;
- eine Detailebene; und
- eine Teildetailebene,
wobei die Statusinformation einen Auslöser umfasst,
wobei der Auslöser einen Alarm umfasst,
wobei eine Visualisierung des Alarms auf jeder Detailebene der Hierarchie des integrierten Zustandsüberwachungssystems bereitgestellt ist,
wobei das technische System ein Leistungsübertragungs- und - verteilungssystem ist,
wobei die Anlage zumindest eines des Folgenden ist:
- ein Transformator;
- ein Kabel oder eine Leitung;
- eine gasisolierte Schalteinrichtung;
ein Leistungsschalter.

14. Leistungsübertragungs- und -verteilungssystem, umfassend zumindest eine Vorrichtung nach Anspruch 13.

## Revendications

1. Procédé pour le traitement des données d'un système technique comprenant plusieurs équipements,
- dans lequel les plusieurs équipements sont au moins partiellement de types différents ;
- dans lequel des données des plusieurs équipements sont déterminées (301) ;
- dans lequel, sur la base des données déterminées, une information d'état est dérivée (302) ;
- dans lequel l'information d'état est transmise à travers une hiérarchie d'un système intégré de surveillance d'état (303),
dans lequel la hiérarchie du système intégré de surveillance d'état comprend
- un niveau de projet principal ;
- un niveau de projet d'équipement ;
- un niveau de détail ; et
- un niveau de sous-détail,
dans lequel l'information d'état comprend un déclencheur,
dans lequel le déclencheur comprend une alarme,
dans lequel une visualisation de l'alarme est fournie sur chaque niveau de détail de la hiérarchie du système intégré de surveillance d'état,
dans lequel le système technique est un système de transport et de distribution d'énergie,
dans lequel l'équipement est au moins l'un des suivants :
- un transformateur ;
- un câble ou une ligne ;
- un appareillage de commutation à isolation gazeuse ;
un disjoncteur.

2. Procédé selon la revendication 1, dans lequel les données des équipements sont déterminées par la mesure d'au moins un capteur ou par le traitement de données sur la base de la mesure d'au moins un capteur.

3. Procédé selon l'une quelconque des revendications précédentes, dans lequel chaque type d'équipement comprend un module de surveillance d'état qui est fusionné au système intégré de surveillance d'état.

4. Procédé selon l'une quelconque des revendications précédentes, dans lequel l'information d'état comprend au moins l'un des suivants :
- un signal d'état.

5. Procédé selon la revendication 4, dans lequel le déclencheur comprend un événement.

6. Procédé selon la revendication 5, dans lequel l'alarme est déterminée sur la base d'événements ou d'alarmes de moyens de surveillance d'état précédents, dans lequel les événements ou les alarmes sont mis en correspondance avec des alarmes du système intégré de surveillance d'état.

7. Procédé selon l'une quelconque des revendications 5 ou 6, dans lequel l'alarme est affichée sur une partie de vue d'ensemble du système intégré de surveillance d'état.

8. Procédé selon la revendication 7, dans lequel le système intégré de surveillance d'état fournit des liens pour accéder à des informations détaillées concernant les équipements, dans lequel les informations détaillées sont affichées dans un cadre conjointement avec la partie de vue d'ensemble.

9. Procédé selon l'une quelconque des revendications 5 à 8, dans lequel une alarme comprend un type d'alarme et un niveau de criticité.

10. Procédé selon la revendication 9, dans lequel le niveau de criticité comprend au moins l'un des suivants :
- une défaillance critique ;
- une défaillance ;
- un avertissement ;
- une défaillance de communication ;
- un événement inconnu.

11. Procédé selon l'une quelconque des revendications 9 ou 10, dans lequel le type d'alarme est associé à au moins l'un des suivants :
- un équipement ;
- un capteur ;
- un moyen de communication ;
- le système de surveillance d'état.

12. Procédé selon l'une quelconque des revendications 9 à 11, dans lequel, sur la base du type d'alarme et/ou de son niveau de criticité, un code couleur est utilisé pour l'affichage de l'alarme, dans lequel, à travers les différents types d'équipements, chaque code couleur est associé à une action prédéfinie et/ou à au moins un spécialiste prédéfini.

13. Dispositif pour le traitement des données d'un système technique comprenant plusieurs équipements dans lequel les plusieurs équipements sont au moins partiellement de types différents, comprenant une unité de traitement qui est agencée pour
- la détermination de données des plusieurs équipements ;
- la dérivation d'une information d'état sur la base des données déterminées ;
- la transmission de l'information d'état à travers une hiérarchie d'un système intégré de surveillance d'état,
dans lequel la hiérarchie du système intégré de surveillance d'état comprend
- un niveau de projet principal ;
- un niveau de projet d'équipement ;
- un niveau de détail ; et
- un niveau de sous-détail,
l'information d'état comprend un déclencheur,
dans lequel le déclencheur comprend une alarme,
dans lequel une visualisation de l'alarme est fournie sur chaque niveau de détail de la hiérarchie du système intégré de surveillance d'état,
dans lequel le système technique est un système de transport et de distribution d'énergie,
dans lequel l'équipement est au moins l'un des suivants :
- un transformateur ;
- un câble ou une ligne ;
- un appareillage de commutation à isolation gazeuse ; un disjoncteur.

14. Système de transport et de distribution d'énergie comprenant au moins un dispositif selon la revendication 13.
